# EUROPÄISCHE PATENTSCHRIFT

(11) **EP 0 900 539 B1**
(45) Veröffentlichungstag und Bekanntmachung des Hinweises auf die Patenterteilung: **07.02.2001**
(21) Anmeldenummer: 98116635.8
(22) Anmeldetag: 03.09.1998
(51) Int. Cl.: A47G 1/20

(54) **Hakenförmige Vorrichtung zum Anbringen von Gegenständen an einer Wand**
Hook-shaped device for mounting objects to a wall
Dispositif en forme de crochet pour fixer des objets à une paroi

(30) Priorität: 05.09.1997 DE 29716027 U
(43) Veröffentlichungstag der Anmeldung: 10.03.1999
(73) Patentinhaber: Nawrath, Georg, 97276 Margetshöchheim (DE)
(72) Erfinder: Nawrath, Georg, 97276 Margetshöchheim (DE)
(74) Vertreter: Pöhner, Wilfried Anton, Dr.

(56) Entgegenhaltungen:
- WO-A-97/07720
- DE-C- 455 765
- DE-U- 9 209 477

## Beschreibung

Die Erfindung betrifft hakenförmige Vorrichtungen zum Anbringen von Gegenständen an einer Wand.

Derartige Vorrichtungen sind in zahlreichen Formen im Handel und bestehen beispielsweise aus Schraubhaken, die in in die Wand eingesetzte Dübel eingeschraubt werden. Dabei kommt es häufig vor, daß zum Anbringen eines größeren Gegenstandes, beispielsweise eines breiten Bildes, wenigstens zwei solcher Schraubhaken erforderlich sind, die sich nach dem Einschrauben in entsprechende Dübel erfahrungsgemäß nur selten in genau gleicher Höhe befinden, so daß das daran aufgehängte Bild unabänderlich schief hängt. Dieses unbefriedigende Ergebnis rührt meistens daher, daß während des Bohrens der für die Dübel benötigten Löcher der Bohrer wegen des unhomogenen Wandmaterials zur Seite und/oder nach unten wegdriftet, wie jeder Hand- und Heimwerker weiß.

Aus der DE 455 765 ist eine Einrichtung zur Befestigung von Spiegelplatten an einer Wand bekannt. Sie besteht aus einer den Plattenrand umfassenden Klaue, die mit einer zylindrischen Bohrung versehen ist, die auf einen Zapfen eines Wandarms aufsteckbar ist, wobei der Wandarm höhenverstellbar an der Wand befestigt ist. Mit dieser Einrichtung sind jedoch lediglich Spiegel- oder sonstige Glasplatten an einer Wand befestigbar. In der WO 97 07720 ist ein Befestigungselement für Bilder odgl. beschrieben. Es besteht aus einem Zwischenstück, das mit einer im wesentlichen vertikal verlaufenden Gewindebohrung versehen ist. Dieses Zwischenstück ist mit einem Befestigungselement an der Wand fixierbar. In die Bohrung ist ein mit einem durchgehenden Gewinde versehener Gewindestab einschraubbar. Das aufzuhängende Bild wird dann auf oder an der Spitze des Gewindestabs abgestützt. Hierbei ist als nachteilig anzusehen, daß zur Befestigung des Zwischenstückes an der Wand ein weiteres Bauteil notwendig ist, jedoch soll das Prinzip der Höhenverstellbarkeit der Aufhängevorrichtung, d. h. das Verdrehen eines Gewindestabes in einer Bohrung, bei der vorliegenden Erfindung verwendet werden.

Der Erfindung liegt die Aufgabe zugrunde, Vorrichtungen der eingangs erwähnten Art anzugeben, mit deren Hilfe jeder Gegenstand genau gerade an einer Wand angebracht werden kann, das heißt mit beispielsweise waagerechtem bzw. senkrechtem Verlauf der Kanten dieses Gegenstandes, wobei hierfür nur einige einfache, auch von einem Laien ausführbare Handgriffe erforderlich sind.

Diese Aufgabe wird gemäß Anspruch 1 dadurch gelöst, daß die Vorrichtungen aus je drei Elementen zusammensetzbar sind, wobei
a) das erste Element im wesentlichen die Form eines fast vollständig in die Wand einsetzbaren Stiftes hat und der aus der Wand herausstehende Teil quer zu seiner Längsrichtung verlaufende Gewindebohrung aufweist,
b) das zweite Element aus einem zylindrischen Bolzen besteht, der an seiner einen Stirnseite einen axial angesetzten glatten Zapfen und an seiner zylindrischen Oberfläche ein Gewinde aufweist, das in die Gewindebohrung des ersten Elementes einschraubbar ist, und
c) das dritte Element aus einem rechtwinkligen Haken besteht, an dessen einem Schenkel ein in die der Richtung des anderen Schenkels entgegengesetzte Richtung sich erstreckender Ansatz angeordnet ist, der etwa die Länge des Zapfens des zweiten Elementes hat und eine vorzugsweise durchgehende Bohrung aufweist, deren Durchmesser so gewählt ist, daß der Ansatz auf den Zapfen wenigstens nahezu spielfrei aufsteckbar ist.

Nach einer vorteilhaften Weiterbildung der Erfindung ist vorgesehen, daß der in die Wand eingreifende Teil des ersten Elementes ein Schraubgewinde aufweist, das in einen in eine in der Wand befindliche zylindrische Bohrung eingesetzten Dübel einschraubbar ist.

Nach einer anderen Alternative ist vorgesehen, daß der in die Wand eingreifende Teil des ersten Elementes eine geriffelte Oberfläche aufweist und in einen in eine in der Wand befindliche zylindrische Bohrung eingesetzten Dübel einschlagbar ist.

Es besteht aber auch die Möglichkeit, daß der in die Wand eingreifende Teil des ersten Elementes eine geriffelte Oberfläche aufweist und in eine in der Wand befindliche zylindrische Bohrung eingipsbar oder einzementierbar ist.

Um das in die Wand eingeschraubte erste Element besser ausrichten zu können, ist ferner vorgesehen, daß der aus der Wand herausstehende Teil des ersten Elementes einen rechteckigen, vorzugsweise quadratischen Querschnitt hat, wobei zwei seiner jeweils gegenüberliegenden Seitenflächen parallel zur Achse der Gewindebohrung verlaufen.

Um das erste Element in einen Dübel einschrauben zu können, weist der aus der Wand herausstehende Teil des ersten Elementes an seiner Stirnseite einen die Klinge eines Schraubendrehers aufnehmenden Schlitz, vorzugsweise Kreuzschlitz, auf.

Zum Einschrauben des zweiten Elementes in die Gewindebohrung des ersten Elementes bzw. zum Verstellen des bereits eingeschraubten zweiten Elementes ist vorgesehen, daß der Bolzen und/oder der Zapfen des zweiten Elementes an der jeweils freien Stirnseite einen die Klinge eines Schraubendrehers aufnehmenden Schlitz, vorzugsweise Kreuzschlitz, aufweisen.

Damit der rechtwinklige Haken des dritten Elementes immer von der Wand absteht und sich nicht auf dem Zapfen des zweiten Elementes seitlich wegdrehen kann, ist ferner vorgesehen, daß der Ansatz des dritten Elementes einen rechteckigen Querschnitt hat und bis nahezu an die Wand heranreicht.

Die mit der Erfindung erzielten Vorteile bestehen insbesondere darin, daß jeder aufzuhängende Gegenstand genau gerade an einer Wand angebracht werden kann, das heißt mit beispielsweise waagerechtem bzw. senkrechtem Verlauf der Kanten dieses Gegenstandes. Hierfür muß lediglich von den zwei verwendeten hakenförmigen Vorrichtungen wenigstens eine durch Verdrehen des zylindrischen Bolzens des zweiten Elementes dieser Bolzen soweit in der Höhe verändert werden, bis die Auflageflächen beider Haken auf gleicher Höhe liegen, wofür nur einige einfache, auch von einem Laien ausführbare Handgriffe mit einem Schraubendreher erforderlich sind.

In einer speziellen Ausgestaltung besitzt der Zapfen einen gegenüber dem Bolzen geringeren Durchmesser, so daß im Ergebnis am Übergang zwischen Zapfen und Bolzen als Anschlagsfläche für das dritte Element einen Absatz gebildet wird, der es in vorteilhafter Weise erlaubt, vergleichsweise große Kräfte vom dritten auf das zweite Element zu übertragen.

Eine Alternative zur Erzeugung eines Anschlages besteht darin, auf dem Bolzen und/oder dem Zapfen koaxial radial überstehende Scheiben oder Ringe anzubringen, die die Funktion eines Anschlages erfüllen. Sie dienen im Hinblick auf den Zapfen als Begrenzung der Einschraubtiefe des zweiten Elementes im herausstehenden Teil (12) des ersten Elementes und auf dem Zapfen als Begrenzung der Einstecktiefe des dritten Elementes hierauf.

Beim Anbringen von Gegenständen an der hakenförmigen Vorrichtung gemäß der Erfindung besteht die große Gefahr, daß während des Einfädelns unmittelbar vor dem Einhängen das im allgemeinsten Fall lose aufgesteckte dritte Element versehentlich in axialer Richtung vom Zapfen nach oben herunter geschoben wird, mit der Folge, daß erneut das dritte Element aufzustecken ist und der Einfädelvorgang von neuem zu beginnen hat. Um hier eine Erleichterung zu schaffen, wird eine gegebenenfalls lösbare Verbindung zwischen dem zweiten und dritten Element, beispielsweise eine Verschraubung vorgeschlagen.

Im Hinblick auf die Abmessungen vom Zapfen relativ zum Bolzen ist von Vorteil, den Durchmesser des ersteren mit 50 bis 75 % von dem des letzteren zu wählen. Hierbei gilt es einen Kompromiß zu schließen: Zum einen sollte der Durchmesser des Bolzens im Vergleich zum Zapfen groß gewählt werden, so daß eine vergleichsweise große Abstütz- und Auflagefläche zur Aufnahme großer Kräfte zur Verfügung steht. Andererseits sollte der Durchmesser des Zapfens jedoch nicht zu klein gewählt werden, um problemlos an der Stirnseite des Zapfens mit einem Schraubendreher angreifen zu können. Wäre der Durchmesser des Zapfens zu gering, wäre der Schlitz zu kurz, um den Schraubenzieher aufnehmen und ein befriedigendes Eindrehen sicherstellen zu können. Im Falle von vergleichsweise kleinen Abmessungen der vorgeschlagenen hakenförmigen Vorrichtung wird man den Durchmesser des Zapfens vergleichsweise groß wählen.

Die Öffnungsweite des dritten Elementes, die zur Aufnahme des über einen Haken anzubringenden Gegenstandes dient, ist bevorzugt so zu wählen, daß sie größer ist als die Stärke des aufzunehmenden Befestigungshakens. Hierbei meint der Begriff "Stärke" im Sinne der Erfindung den Abstand zwischen der vom Haken der Vorrichtung zu durchgreifenden Öffnung und der oberen Begrenzungsflächedes Hakens, gemessen in der Ebene des Hakens. Die Öffnungsweite addiert sich aus dem Radius der Außenfläche des Ansatzes plus den Abstand der inneren Begrenzungsfläche des anderen Schenkels von der Achse der Bohrung. Der entscheidende Vorteil ist, daß der anzubringende Gegenstand, wie zum Beispiel ein Bild, in horizontaler Ausrichtung bei guter Einsehbarkeit eingefädelt werden kann und anschließend um 90° nach unten geklappt wird.

Beim Anbringen des Gegenstandes könnte sich zudem das Problem ergeben, daß der Gegenstand unterhalb des Hakens, so z. B. am zweiten Element und insbesondere am herausstehenden Teil des ersten Elementes zur Anlage kommt, so daß eine exakte vertikale Ausrichtung nicht mehr ohne weiteres möglich ist. Zur Beseitigung dieses Problemes ist von Vorteil, wenn der Radius der Außenfläche des Ansatzes kleiner ist als der Abstand der inneren Begrenzungsfläche des anderen Schenkels von der Achse der Bohrung. Beträgt diese Differenz mehr als die Dicke des Befestigungshaken des anzubringenden Gegenstandes (gemessen senkrecht zu der durch den Befestigungshaken beschriebenen Ebene) ist eine exakt vertikale Ausrichtung ohne zusätzlichen Maßnahmen möglich.

Schließlich wird noch vorgeschlagen, daß die vom Ansatz und den einen Schenkel gebildete obere stirnseitige Begrenzungsfläche eine horizontale Ebene ist. Bei Verwendung eines entsprechenden, das heißt ebenfalls eine horizontale Kontaktfläche bildenden Befestigungshakens, ergibt sich eine Stabilisierung gegen Drehungen um eine horizontal verlaufende Achse, das heißt ein Verschwenken des anzubringenden Gegenstandes, was besonders dann von Bedeutung ist, wenn nur ein einziger Befestigungspunkt vorgesehen ist. Ein Verschwenken des Gegenstandes, wie z. B. des Bildes wird weitgehend unterbunden; eine exakte horizontale Ausrichtung des Bilderrahmens erübrigt sich.

Ein Ausführungsbeispiel der Erfindung ist in der Zeichnung dargestellt und wird im folgenden näher beschrieben. Es zeigen
- Fig. 1: die Seitenansicht einer in eine Wand eingeschraubten hakenförmigen Vorrichtung gemäß der Erfindung,
- Fig. 2: die Draufsicht auf das in eine Wand eingeschraubte erste Element der Vorrichtung nach Fig. 1,
- Fig. 3: eine Seitenansicht, des zweiten Elementes der Vorrichtung nach Fig. 1 und
- Fig. 4: verschiedene Ansichten des dritten Elementes der Vorrichtung nach Fig. 1.

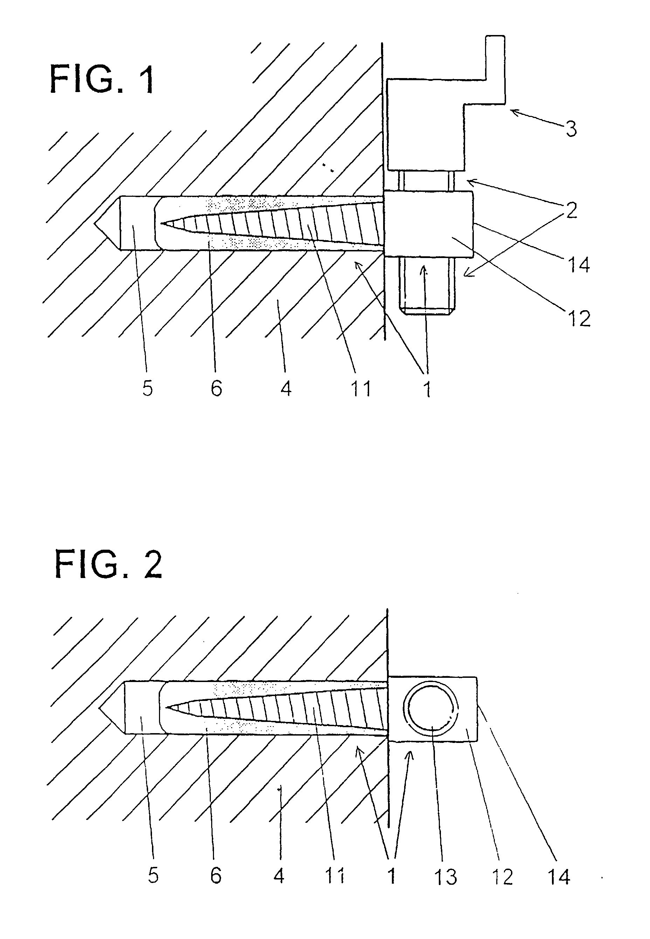

Wie in Fig. 1 dargestellt ist, besteht eine hakenförmige Vorrichtung gemäß der Erfindung aus drei Elementen (1, 2, 3), von denen das Element (1) in einen Dübel (6) eingeschraubt ist, der sich in einer in die Wand (4) eingebrachten Bohrung (5) befindet. Der aus der Wand (4) herausstehende Teil (12) des Elementes (1) hat einen quadratischen Querschnitt und weist eine quer zur Längsrichtung des Elementes (1) verlaufende Gewindebohrung (13) auf (Fig. 2).

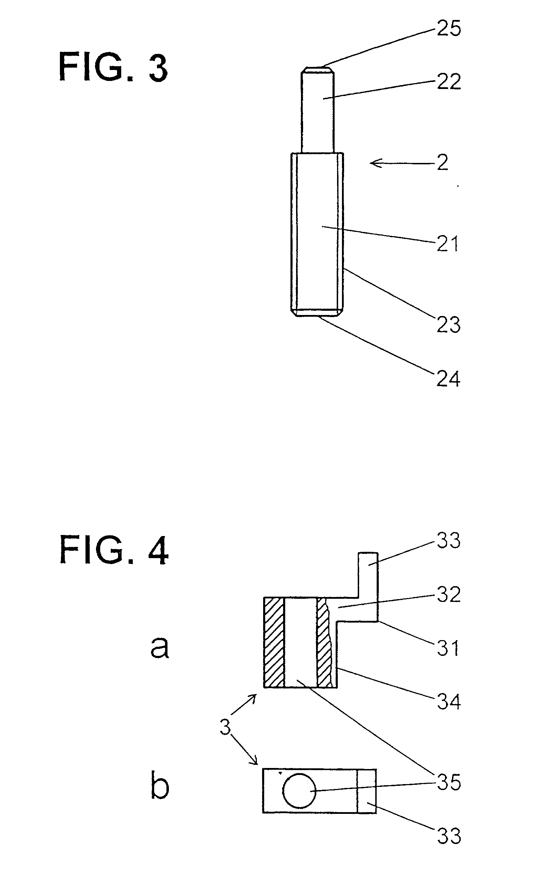

Das aus einem ein Gewinde (23) tragenden Bolzen (21) und einem an der einen Stirnseite des Bolzens (21) axial angesetzten glatten Zapfen (22) (Fig. 3) bestehende zweite Element (2) ist in die Gewindebohrung (13) (Fig. 2) des ersten Elementes (1) eingeschraubt, wobei der Zapfen (22) nach oben zeigt und das dritte Element (3) aufnimmt, das aus einem rechtwinkligen Haken (31) besteht, an dessen einem Schenkel (32) ein in die zu der Richtung des anderen Schenkels (33) entgegengesetzte Richtung sich erstreckender Ansatz (34) angeordnet ist, der eine durchgehende Bohrung (35) aufweist (Fig. 4), in die der Zapfen (22) spielfrei eingreift.

Durch Verdrehen des Bolzens (21) kann die Lage des Hakens (31) in seiner Höhe verändert und an die Höhe des Hakens einer sich bereits in der Wand (4) befindlichen weiteren Vorrichtung angepaßt werden.

In Fig. 2 ist in einer Draufsicht dargestellt, wie die Gewindebohrung (13) in dem ersten Element (1) angeordnet ist, in die der in Fig. 3 gezeigte Bolzen (21) des zweiten Elements (2) mit seinem Gewinde (23) einschraubbar ist.

Die Fig. 3 zeigt in einer Seitenansicht das vollständige zweite Element (2), das aus dem Bolzen (21) mit seinem Gewinde (23) und aus dem an der einen Stirnseite des Bolzens (21) angebrachten glatten Zapfen (22) besteht, der das in Fig. 4 dargestellte dritte Element (3) mit seiner durchgehenden Bohrung (35) aufnimmt.

Die Fig. 4 zeigt das aus dem rechtwinkligen Haken (31) und dem Ansatz (34) bestehende dritte Element (3) in einer teilweise geschnittenen Seitenansicht (a) sowie in einer Draufsicht (b).

## Patentansprüche

1. Hakenförmige Vorrichtung zum Anbringen von Gegenständen an einer Wand, bestehend aus drei Elementen (1,2,3)
**dadurch gekennzeichnet**, daß
a) das erste Element (1) im wesentlichen die Form eines fast vollständig in die Wand (4) einsetzbaren Stiftes hat, und der aus der Wand (4) herausstehende Teil (12) eine quer zu seiner Längsrichtung verlaufende Gewindebohrung (13) aufweist,
b) das zweite Element (2) aus einem zylindrischen Bolzen (21) besteht, der an seiner einen Stirnseite einen axial angesetzten glatten Zapfen (22) und an seiner zylindrischen Oberfläche ein Gewinde (23) aufweist, das in die Gewindebohrung (13) des ersten Elementes (1) einschraubbar ist, und
c) das dritte Element (3) aus einem rechtwinkligen Haken (31) besteht, an dessen einem Schenkel (32) ein in die zu der Richtung des anderen Schenkels (33) entgegengesetzter Richtung sich erstreckender Ansatz (34) angeordnet ist, der etwa die Länge des Zapfens (22) des zweiten Elementes (2) hat und eine vorzugsweise durchgehende Bohrung (35) aufweist, deren Durchmesser so gewählt ist, daß der Ansatz (34) auf den Zapfen (22) wenigstens nahezu spielfrei aufsteckbar ist.

2. Vorrichtung nach Anspruch 1, **dadurch gekennzeichnet**, daß der in die Wand (4) eingreifende Teil (11) des ersten Elementes (1) ein Schraubgewinde aufweist, das in einen in eine in der Wand (4) befindliche zylindrische Bohrung (5) eingesetzten Dübel (6) einschraubbar ist.

3. Vorrichtung nach Anspruch 1, **dadurch gekennzeichnet**, daß der in die Wand (4) eingreifende Teil (11) des ersten Elementes (1) eine geriffelte Oberfläche aufweist und in einen in der Wand (4) befindliche zylindrische Bohrung (5) eingesetzten Dübel (6) einschlagbar ist.

4. Vorrichtung nach Anspruch 1, **dadurch gekennzeichnet,** daß der in die Wand (4) eingreifende Teil (11) des ersten Elementes (1) eine geriffelte Oberfläche aufweist und in eine in der Wand (4) befindliche zylindrische Bohrung (5) eingipsbar oder einzementierbar ist.

5. Vorrichtung nach Anspruch 1 bis 4, **dadurch gekennzeichnet**, daß der aus der Wand (4) herausstehende Teil (12) des ersten Elementes (1) einen rechteckigen, vorzugsweise quadratischen Querschnitt hat, wobei zwei seiner jeweils gegenüberliegenden Seitenflächen parallel zur Achse der Gewindebohrung (13) verlaufen.

6. Vorrichtung nach einem der Ansprüche 1 bis 5, **dadurch gekennzeichnet,** daß der aus der Wand (4) herausstehende Teil (12) des ersten Elementes (1) an seiner Stirnseite (14) einen die Klinge eines Schraubendrehers aufnehmenden Schlitz, vorzugsweise Kreuzschlitz, aufweist.

7. Vorrichtung nach einem der Ansprüche 1 bis 6, **dadurch gekennzeichnet**, daß der Bolzen (21) und/oder der Zapfen (22) des zweiten Elementes (2) an der jeweils freien Stirnseite (24, 25) einen die Klinge eines Schraubendrehers aufnehmenden Schlitz, vorzugsweise Kreuzschlitz, aufweisen.

8. Vorrichtung nach einem der Ansprüche 1 bis 7, **dadurch gekennzeichnet**, daß der Ansatz (34) des dritten Elementes (3) einen rechteckigen Querschnitt hat und bis nahezu an die Wand (4) heranreicht.

9. Vorrichtung nach einem der vorhergehenden Ansprüche, **dadurch gekennzeichnet**, daß der Zapfen (22) gegenüber dem Bolzen (21) koaxial angeordnet ist und einen geringeren Durchmesser beschreibt.

10. Vorrichtung nach einem der vorhergehenden Ansprüche, **dadurch gekennzeichnet**, daß auf dem Bolzen (21) und/oder dem Zapfen (22) koaxial eine radial überstehende Scheibe oder Ring als Anschlag angebracht sind.

11. Vorrichtung nach einem der vorhergehenden Ansprüche, **dadurch gekennzeichnet**, daß das dritte Element (3) mit dem zweiten Element (2) verbunden, z. B. verschraubt ist.

12. Vorrichtung nach einem der vorhergehenden Ansprüche, **dadurch gekennzeichnet**, daß der Durchmesser des Zapfens (22) 50 bis 75 % des Durchmessers des Bolzens (21) beträgt.

13. Vorrichtung nach einem der vorhergehenden Ansprüche, **dadurch gekennzeichnet,** daß die Öffnungsweite des dritten Elementes (3), d.h. der Radius der Außenfläche des Ansatzes (34) plus Abstand der inneren Begrenzungsfläche des anderen Schenkels (33) bezogen auf die Achse der Bohrung (35) größer ist als die Stärke des aufzunehmenden Befestigungshakens.

14. Vorrichtung nach einem der vorhergehenden Ansprüche, **dadurch gekennzeichnet**, daß der Radius der Außenfläche des Ansatzes (34) kleiner ist als der Abstand der inneren Begrenzungsfläche des anderen Schenkels (33) von der Achse der Bohrung (35).

15. Vorrichtung nach Anspruch 14, **dadurch gekennzeichnet**, daß der Abstand der inneren Begrenzungsfläche des anderen Schenkels (33) minus dem Radius der Außenfläche des Ansatzes (34) größer ist als die Dicke des aufzunehmenden Befestigungshakens.

16. Vorrichtung nach einem der vorhergehenden Ansprüche, **dadurch gekennzeichnet**, daß die vom Ansatz (34) und dem einen Schenkel (32) gebildete obere stirnseitige Begrenzungsfläche eine horizontal verlaufende Ebene beschreibt.

## Claims

1. Hook-shaped device for mounting objects to a wall, consisting of three elements (1, 2, 3), **wherein**
a) the first element (1) has essentially the design of a peg which can be driven almost completely into the wall (4) and the projection part (12) standing out of the wall (4) has a threaded bore (13) extending crosswise in relation to its lengthwise direction,
b) the second element (2) comprises a cylindrical bolt (21) which on one end has an axial smooth journal (22) and on its cylindrical surface a thread (23) which can be screwed into the threaded bore (13) of the first element (1), and
c) the third element (3) comprises a right-angled hook (31) on one leg (32) of which a shoulder (34) is disposed extending in a direction that is opposed to the direction of the other leg (33), which is more or less the length of the journal (22) of the second element (2) and has a preferably passage bore (35) with a diameter so that the shoulder (34) can be pushed at least almost tightly on to the journal (22).

2. Device according to claim 1, **wherein** the part (11) of the first element (1) which engages the wall (4) has a screw thread which can be screwed into a dowel (6) inserted in a cylindrical bore (5) disposed in the wall (4).

3. Device according to claim 1, **wherein** the part (11) of the first element (1) engaging with the wall (4) has a corrugated surface and can be driven into a dowel (6) inserted in a cylindrical bore (5) disposed in the wall (4).

4. Device according to claim 1, **wherein** the part (11) of the first element (1) engaging in the wall (4) has a corrugated surface and can be plastered or sealed in a cylindrical bore (5) disposed in the wall (4).

5. Device according to claim 1 to 4, **wherein** the part (12) of the first element (1) standing out of the wall (4) has a rectangular, preferably square cross section, whereby two of its respectively opposing lateral surfaces extend parallel to the axis of the threaded bore (13).

6. Device according to one of claims 1 to 5, **wherein** the part (12) of the first element (1) standing out of the wall (4) has at its end (14) a slot, preferably a cross recession, which receives the blade of a screw driver.

7. Device according to one of claims 1 to 6, **wherein** the bolt (21) and/or the journal (22) of the second element (2) have on the respectively free end (24, 25) a slot, preferably a cross recession, to receive the blade of a screwdriver.

8. Device according to one of claims 1 to 7, **wherein** the shoulder (34) of the third element (3) has a rectangular cross section and reaches almost to the wall (4).

9. Device according to one of the preceding claims, **wherein** the journal (22) is disposed coaxially in relation to the bolt (21) and has a smaller diameter.

10. Device according to one of the preceding claims, **wherein** on the bolt (21) and/or journal (22) are disposed coaxially a radially projecting disc or ring as a limit stop.

11. Device according to one of the preceding claims, **wherein** the third element (3) is connected to the second element (2), e.g. via a screw connection.

12. Device according to one of the preceding claims, **wherein** the diameter of the journal (22) is 50% to 75% of the diameter of the bolt (21).

13. Device according to one of the preceding claims, **wherein** the aperture width of the third element (3), i.e. the radius of the exterior surface of the shoulder (34) and the distance of the inner limiting surface of the other leg (33), related to the axis of the bore (35), is larger than the thickness of the receiving fixing hook.

14. Device according to one of the preceding claims, **wherein** the radius of the exterior surface of the shoulder (34) is smaller than the distance of the inner limiting surface of the other leg (33) from the axis of the bore (35).

15. Device according to claim 14, **wherein** the distance of the inner limiting surface of the other leg (33) less the radius of the exterior surface of the shoulder (34) is larger than the thickness of the receiving fixing hook.

16. Device according to one of the preceding claims, **wherein** the upper end limiting surface formed by the shoulder (34) and the one leg (32) describes a horizontal plane.

## Revendications

1. Dispositifs en forme de crochets, permettant de suspendre des objets à un mur, composé de trois éléments (1, 2, 3).
a) le premier élément (1) a en gros la forme d'une tige rentrant pratiquement entièrement dans le mur (4), la partie restant en-dehors (12) du mur (4) étant pourvue d'un trou taraudé (13) dans le sens perpendiculaire à son axe longitudinal,
b) le deuxième élément (2) se compose d'un boulon cylindrique (21 ) dont une extrémité porte un téton lisse (22), monté dans le sens axial et dont la surface cylindrique est filetée, le filetage (23) se vissant dans le trou taraudé (13) du premier élément (1), et
c) le troisième élément (3) comprend un crochet en équerre (31 ) dont l'un des côtés (32) présente un talon (34) allant dans la direction opposée à l'autre côté (33), de longueur approximativement égale à celle du téton (22) du deuxième élément (2), et percé d'un trou, de préférence traversant (35), dont le diamètre est choisi de façon à ce que le talon (34) s'enfile pratiquement sans jeu sur le téton (22).

2. Dispositif selon la revendication 1, **caractérisé en ce que** la partie (11 ) rentrant dans le mur (4) du premier élément (1) est munie d'un filetage qui se visse dans une cheville (6) montée dans un alésage cylindrique (5) percé dans le mur (4).

3. Dispositif selon la revendication 1, **caractérisé en ce que** la partie (11 ) rentrant dans le mur (4) du premier élément (1) est dotée d'une surface cannelée et enfoncée dans une cheville (6) fixée dans l'alésage cylindrique (5) percé dans le mur (4).

4. Dispositif selon la revendication 1, **caractérisé en ce que** la partie (11) rentrant dans le mur (4) du premier élément (1) est dotée d'une surface cannelée, puis plâtrée ou cimentée dans l'alésage cylindrique (5) percé dans le mur (4).

5. Dispositif selon l'une des revendications 1 à 4, **caractérisé en ce que** la partie (12) sortant du mur (4) du premier élément (1) a une section rectangulaire, ou de préférence carrée, deux des faces opposées étant parallèles à l'axe du trou taraudé (13).

6. Dispositif selon l'une des revendications 1 à 5, **caractérisé en ce que** la face avant (14) de la partie (12) sortant du mur (4) du premier élément (1) est pourvue d'une fente, de préférence en croix, de la forme de la lame d'un tournevis pour pouvoir visser le premier élément dans une cheville.

7. Dispositif selon l'une des revendications 1 à 6, **caractérisé en ce que** la face avant libre (24, 25) du boulon (21) et/ou du téton (22) du deuxième élément (2) d'une fente, de préférence en croix, de la forme de la lame d'un tournevis.

8. Dispositif selon l'une des revendications 1 à 7, **caractérisé en ce que** le talon (34) du troisième élément (3) est de section rectangulaire et va presque jusqu'au mur (4).

9. Dispositif selon l'une des revendications précédentes, **caractérisé en ce que** le téton (22) est coaxial au boulon (21) et a un diamètre inférieur.

10. Dispositif selon l'une des revendications précédentes, **caractérisé en ce que** l'on place des rondelles ou bagues coaxiales, faisant saillie dans le sens radial, sur le boulon (21) et/ou le téton (22), ces rondelles ou bagues servant de butée.

11. Dispositif selon l'une des revendications précédentes, **caractérisé en ce que** le troisième élément (3) est relié au deuxième élément (2), par ex. par une vis.

12. Dispositif selon l'une des revendications précédentes, **caractérisé en ce que** le diamètre du téton (22) représente 50 à 75 % du diamètre du boulon (21).

13. Dispositif selon l'une des revendications précédentes, **caractérisé en ce que** la largeur de l'ouverture du troisième élément (3), c.-à-d. la somme du rayon de la surface extérieure du talon (34) et de la distance de la surface de délimitation intérieure de l'autre côté (33) par rapport à l'axe de l'alésage (35), est supérieure à l'épaisseur du crochet de fixation qui doit y rentrer.

14. Dispositif selon l'une des revendications précédentes, **caractérisé en ce que** le rayon de la surface extérieure du talon est inférieur à la distance entre la surface de délimitation intérieure de l'autre côté (33) et l'axe de l'alésage (35).

15. Dispositif selon la revendication 14, **caractérisé en ce que** la distance entre la surface de délimitation intérieure de l'autre côté (33), moins le rayon de la surface extérieure du talon (34), est supérieure à l'épaisseur du crochet de fixation qui doit y rentrer.

16. Dispositif selon l'une des revendications précédentes, **caractérisé en ce que** la surface frontale de délimitation supérieure, constituée par le talon (34) et un côté (32), forme un plan horizontal.
